# EUROPEAN PATENT APPLICATION

(11) **EP 2 008 803 A1**
(43) Date of publication of application: **31.12.2008**
(21) Application number: 08010728.7
(22) Date of filing: 12.06.2008
(51) Int. Cl.: B32B 1/08, B32B 25/08, B32B 27/08, F16L 11/04

(54) **Multi-layer hose**

(30) Priority: 28.06.2007 JP 2007169952
(71) Applicant: Nissan Motor Co., Ltd., Kanagawa 221-0023 (JP)
(72) Inventor: Shinoda, Atsuhiro, Atsugi-shi Kanagawa 243-0123 (JP); Kumagai, Hiroshi, Atsugi-shi Kanagawa 243-0123 (JP)
(74) Representative: Schaeberle, Steffen

(57) **Abstract**

A multi-layer hose usable for a fuel hose of an automotive vehicle. The multi-layer hose includes an intermediate layer formed of a resin whose main component includes at least one of polyvinyl alcohol and ethylene-vinyl alcohol copolymer. An outer layer is provided formed of rubber and disposed outside the intermediate layer. Additionally, an inner layer is provided formed of fluoroelastomer and disposed inside the intermediate layer to be laminated directly on the intermediate layer.

## Description

### BACKGROUND OF THE INVENTION

This invention relates to improvements in a multi-layer hose preferably usable for a fuel hose of an automotive vehicle, and more particularly to a multi-layer hose having a strong adhesiveness between layers while having an excellent fuel permeation resistance against fuel such as an alcohol-containing fuel.

In recent years, mainly in the United States, the emission control for hydrocarbon-based evaporative emissions from automotive vehicle fuel systems has been strictly tightened, and therefore rubber hoses for fuel having various structures have been developed to meet the control. Particularly in order to achieve a sealability, a fuel permeation resistance and a flexibility which are required in a connecting pipe, rubber hoses variously proposed have a structure where rubber materials serving as inner and outer layers are laminated on a fuel-barrier resinous material serving as intermediate layer.

As proposed in Japanese Examined application publication No. 2004-506548, multi-layer hoses which have been widely employed are provided by disposing fluoroelastomer (FKM) or acrylonitrile butadiene (NBR) as an inner layer, ternary copolymer fluorothermoplastic THV (tetrafluoroethylene-hexafluoropropylene-vinylidene fluoridate) as an intermediate layer (a fuel-barrier layer), and epichlorohydrin rubber (ECO) and acrylonitrile butadiene (NBR) as an outer layer. Additionally, it is commonly known that such multi-layer hoses can include further layers formed of chlorosulfonated polyethylene (CSM), chlorinated polyethylene (CPE) or the like on the outer layer.

### SUMMARY OF THE INVENTION

However, drawbacks have been encountered in the above conventional techniques. More specifically, in the multi-layer hoses including fluorothermoplastic as the fuel-barrier layer as discussed above, the thickness of the fuel-barrier layer tends to be increased in order to secure a fuel barrier performance against an ethanol-containing gasoline which becomes widespread.

However, as the thickness of the fuel-barrier layer is increased in order to improve the fuel barrier performance, the hose is decreased in flexibility and formability. In other words, it becomes difficult to secure both the formability and the fuel barrier performance of the multi-layer hose with increasing the fuel-barrier layer in thickness.

Further, designs for materials should be arranged because of the fuel-barrier layer formed of fluorothermoplastic, for example, by disposing an adhesive layer in order to secure an adhesiveness to the inner and outer rubber layers, by carrying out a treatment with a primer, or by adding an adhesiveness-providing agent to the inner layer rubber. However, this raises a fear that an unreacted adhesive component is extracted into fuel thereby adversely affecting peripheral parts.

In view of the above, an object of the present invention is to provide an improved multi-layer hose which can effectively overcome drawbacks encountered in conventional multi-layer hose.

Another object of the present invention is to provide a multi-layer hose being superior in fuel barrier performance to those produced by conventional fuel-barrier techniques, and being excellent in fuel barrier performance against the alcohol-containing fuel while exhibiting a strong adhesiveness among the intermediate layer and the inner and outer layers.

An aspect of the present invention resides in a multi-layer hose comprising: an intermediate layer formed of a resin whose main component includes at least one of polyvinyl alcohol and ethylene-vinyl alcohol copolymer; an outer layer formed of rubber and disposed outside the intermediate layer; and inner layer formed of fluoroelastomer and disposed inside the intermediate layer to be laminated directly on the intermediate layer.

### BRIEF DESCRIPTION OF THE DRAWING

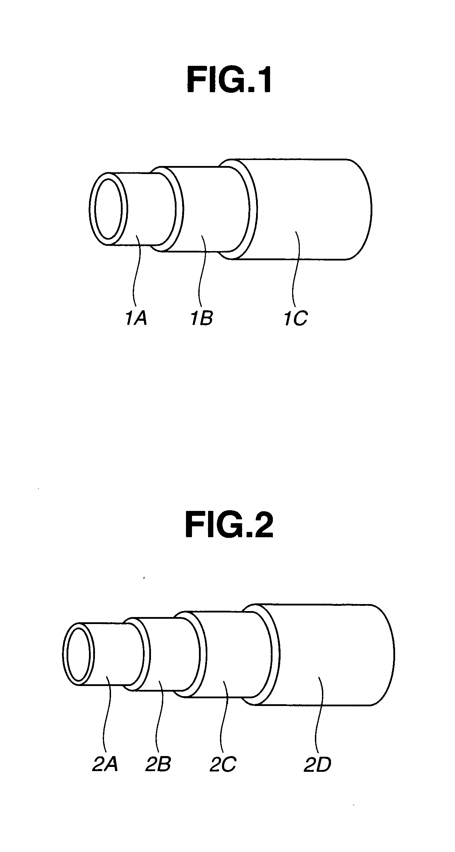

Fig. 1 is a fragmentary perspective view of an embodiment of a multi-layer hose according to the present invention, the multi-layer hose being formed to have a three-layer structure as will be discussed as Examples of the present invention, in which each layer is more largely cut out than an immediately inner one for the purpose of clearly showing the three-layer structure of the multi-layer hose; and
Fig. 2 is a fragmentary perspective view of another embodiment of the multi-layer hose according to the present invention, the multi-layer hose being formed to have a four-layer structure as will be discussed as Examples of the present invention, in which each layer is more largely cut out than an immediately inner one for the purpose of clearly showing the four-layer structure of the multi-layer hose.

### DETAILED DESCRIPTION OF THE INVENTION

Hereinafter, an embodiment of a multi-layer hose according to the present invention will be discussed in detail.

According to the present invention, a multi-layer hose includes an intermediate layer (or an fuel-barrier layer) formed with an axial hollow through which fuel is flowable. The intermediate layer is formed of a resin whose main component is at least one of polyvinyl alcohol and ethylene-vinyl alcohol copolymer, thereby being excellent in barrier performance against an alcohol-containing fuel and in adhesiveness to rubbers. The multi-layer hose further includes an outer layer formed of rubber and disposed outside the intermediate layer in a diametrical direction of the intermediate layer to be coaxial with the intermediate layer. Furthermore, the multi-layer hose includes an inner layer formed of fluoroelastomer and disposed inside the intermediate layer in the diametrical direction of the intermediate layer to be coaxial with the intermediate layer. The intermediate layer in the present invention is allowed to have a thickness equal to or smaller than that of a conventional fuel-barrier layer on which fluorothermoplastic is used in conventional hoses, thereby resolving issues of a flexibility and a workability.

In the multi-layer hose provided according to the present invention, the resin forming the intermediate layer contains at least one of polyvinyl alcohol and ethylene-vinyl alcohol copolymer as its main component. In this specification "the main component" refers to a content of not lower than 70 %.

The inner layer of the multi-layer hose provided according to the present invention is formed of fluoroelastomer such as vinylidene fluoride-hexafluoropropylene binary copolymer fluoroelastomer, vinylidene fluoride-hexafluoropropylene-tetrafluoroethylene ternary copolymer fluoroelastomer and tetrafluoroethylene-propylerie-vinylidene fluoride ternary copolymer fluoroelastomer. It is preferable not to dispose any layer of other composition than that of the intermediate layer between the intermediate layer and the inner elastomer layer.

More specifically, the intermediate layer formed of the resin whose main component includes at least one of polyvinyl alcohol and ethylene-vinyl alcohol copolymer and the inner layer formed of the fluoroelastomer are directly laminated (or laminated to be in contact with each other) and then vulcanized, with which a strong adhesiveness between the layers and an excellent fuel-barrier performance against the alcohol-containing fuel are ensured.

The strong adhesiveness can be thus ensured, so that it is required neither to add an adhesive component to the inner elastomer layer nor to apply an adhesive to the surface of the resinous layers. With this, the multi-layer hose provided according to the present invention is excellent in fuel-barrier performance and in workability, and has a strong adhesiveness between the layers and a low extraction of the adhesive component into fuel.

The outer layer disposed generally coaxial with and around the intermediate layer may be formed of a rubber material selected from the group consisting of epichlorohydrin rubber (ECO), acrylonitrile butadiene (NBR), polyacrylic rubber (ACM), etylene acrylic rubber (AEM), chlorosulfonated polyethylene (CSM), chlorinated polyethylene (CPE), chloroprene rubber (CR), ethylene propylene rubber (EPM) and ethylene propylene diene rubber (EPDM).

The multi-layer hose according to the present invention is based on the ones having a three-layer structure including the intermediate layer and the outer and inner layers disposed outside and inside the intermediate layer, respectively; however, it will be understood that the number of layers is not limited to these as far as the multi-layer hose includes the intermediate layer formed of the resin whose main component is polyvinyl alcohol and/or ethylene-vinyl alcohol copolymer and the inner layer formed of a rubber material and disposed inside intermediate layer. In other words, the multi-layer hose may be arranged according to various kinds of performances required, such that the intermediate layer or the outer layer has a multi-layer structure. Possibly an intervening layer may be disposed between the intermediate layer and the outer layer, or the outer layer may be coated with a coat layer at the outer periphery of the outer layer.

The multi-layer hose according to the present invention is provided by directly laminating the intermediate layer and the inner elastomer layer without addition of the adhesive component and without application of the adhesive, thereby obtaining an excellent performance against extraction of the adhesive component or the like as discussed above. Such an adhesive component-extraction is examined as follows. The multi-layer hose is charged with a solution prepared by mixing isooctane, toluene and ethanol at a volume ratio of 45:45=10, and then sealed and set aside at 40 °C for 168 hours (i.e., for 1 week). It is preferable that an extract contained in the sealed solution retrieved from the hose has a hexane-insoluble content (a content insoluble in hexane) of not larger than 0.1 mg/cm².

The multi-layer hose according to the present invention is obtained by preparing a multi-layer tubular hose formed through, for example, a tandem extrusion process (a multi-layer extrusion for rubber or resinous layers) or a process of wrapping the resin containing polyvinyl alcohol and/or ethylene-vinyl alcohol copolymer and serving as the intermediate layer around the inner elastomer layer, and then by vulcanizing the tubular hose.

The multi-layer hose according to the present invention includes the intermediate layer formed of the resin whose main component is polyvinyl alcohol and/or ethylene-vinyl alcohol copolymer and the outer and inner elastomer layers respectively disposed outside and inside the intermediate layer, and it is preferably used as a fuel hose particularly for an automotive vehicle powered by the alcohol-containing fuel. Such a laminated structure as to be provided by laminating rubber materials on both sides of the resin containing polyvinyl alcohol and/or ethylene-vinyl alcohol copolymer can be widely applied to those other than the hoses, for example, to vessels for various kinds of liquids such as alcohols, to feed pipes or to storage tanks. Fuels are exemplified by gasoline, diesel fuel, alcohol, LP gas, natural gas, hydrogen fuel and any combinations of these; however, the examples are not particularly limited to these.

### EXAMPLES

The present invention will be more readily understood with reference to the following Examples and Comparative Examples; however, these Examples are intended to illustrate the invention and are not to be construed to limit the scope of the invention.

### EXAMPLE 1

A multi-layer hose having a three-layer structure as shown in Fig. 1 was produced as follows. The three-layer structure included an inner layer denoted by the reference numeral 1A in Fig. 1 and formed of vinylidene fluoride-hexafluoropropylene-tetrafluoroethylene ternary copolymer fluoroelastomer on which a peroxide was used as a vulcanizing agent. An intermediate layer denoted by the reference numeral 1B was formed of ethylene-vinyl alcohol copolymer (available from KURARAY CO., LTD. under the trade name of F101). An outer layer denoted by the reference numeral 1C was formed of epichlorohydrin rubber (ECO) on which thiourea was used as a vulcanizing agent. In the production process, inner layer 1A, intermediate layer 1B and outer layer 1C were extruded to form a tubular hose. Then, vulcanization (included a primary one made at 150 °C for 30 minutes and a secondary one made after the primary one at 160 °C for 90 minutes) was conducted on the tubular hose, thereby obtaining the multi-layer hose having the three-layer structure of Example 1.

Inner layer 1A, intermediate layer 1B and outer layer 1C respectively had layer thickness of 0.5 mm, 0.1 mm and 3.4 mm. Further, the multi-layer hose had an outer diameter of 32.4 mm, an inner diameter of 24.4 mm, and a length (in an axial direction) of 300 mm.

### EXAMPLE 2

A procedure of Example 1 was repeated with the exception that inner layer 1A was formed of vinylidene fluoride-hexafluoropropylene binary copolymer fluoroelastomer on which a peroxide was used as a vulcanizing agent and that intermediate layer 1B was formed of ethylene-vinyl alcohol copolymer resin (available from KURARAY CO., LTD. under the trade name of M100), thereby obtaining the multi-layer hose having the three-layer structure of Example 2.

### EXAMPLE 3

A procedure of Example 1 was repeated with the exception that inner layer 1A was formed of vinylidene fluoride-hexafluoropropylene binary copolymer fluoroelastomer on which a peroxide was used as a vulcanizing agent, thereby obtaining the multi-layer hose having the three-layer structure of Example 3.

### EXAMPLE 4

A procedure of Example 1 was repeated with the exception that polyol was used as a vulcanizing agent on inner layer 1A formed of vinylidene fluoride-hexafluoropropylene-tetrafluoroethylene ternary copolymer fluoroelastomer, thereby obtaining the multi-layer hose having the three-layer structure of Example 4.

### EXAMPLE 5

A procedure of Example 1 was repeated with the exception that intermediate layer 1B formed of ethylene-vinyl alcohol copolymer resin was replaced with that formed of polyvinyl alcohol resin (available from KURARAY CO., LTD. under the trade name of PVOH), thereby obtaining the multi-layer hose having the three-layer structure of Example 5.

### EXAMPLE 6

A procedure of Example 1 was repeated with the exception that inner layer 1A was formed of tetrafluoroethylene-propylene-vinylidene fluoride ternary copolymer fluoroelastomer on which polyol was used as a vulcanizing agent, thereby obtaining the multi-layer hose having the three-layer structure of Example 6.

### COMPARATIVE EXAMPLE 1

A procedure of Example 1 was repeated with the exception that inner layer 1A was formed of vinylidene fluoride-hexafluoropropylene-tetrafluoroethylene ternary copolymer fluoroelastomer to which 1,8-diazabicyclo[5.4.0]undec-7-ene was added and that intermediate layer 1B was formed of ternary copolymer fluorothermoplastic THV (tetrafluoroethylene-hexafluoropropylene-vinylidene fluoridate), thereby obtaining the multi-layer hose having the three-layer structure of Comparative Example 1.

### COMPARATIVE EXAMPLE 2

A multi-layer hose having a four-layer structure as shown in Fig. 2 was produced. The four-layer structure included an inner layer denoted by the reference numeral 2A in Fig. 2 and formed of NBR to which 1,5-diazabicyclo[4.3.0]non-5-ene was added. Sulfur was used as a vulcanizing agent on inner layer 2A. An intermediate layer denoted by the reference numeral 2B was formed of ternary copolymer fluorothermoplastic THV (tetrafluoroethylene-hexafluoropropylene-vinylidene fluoridate). An outer layer denoted by the reference numeral 2D was formed of chlorosulfonated polyethylene (CSM). Additionally, an intervening layer denoted by the reference numeral 2C and formed of the same material as that forming inner layer 2A (more specifically, the material formed of NBR to which 1,5-diazabicyclo[4.3.0]non-5-ene was added) was disposed to intervene between outer layer 2D and intermediate layer 2B, thereby obtaining the multi-layer hose having the four-layer structure of Comparative Example 2.

Inner layer 2A, intermediate layer 2B, intervening layer 2C and outer layer 2D respectively had layer thickness of 1.5 mm, 0.1 mm, 1.9 mm and 0.5 mm. Further, the multi-layer hose had an outer diameter of 32.4 mm, an inner diameter of 24.4 mm, and a length (in an axial direction) of 300 mm.

### [Evaluation of Performance]

Each of the multi-layer hoses obtained in Examples and Comparative Examples had a fuel permeation test, an adhesiveness test and an adhesive component-extraction test (for examining an amount of the adhesive component extracted into fuel) in the following manner, with which performance thereof was evaluated. Results of the evaluation are shown in Table 1.

### [Fuel Permeability]

A vessel for the test, formed of stainless steel, was charged with a fuel prepared by mixing 10 vol.% of ethanol and 90 vol.% of regular gasoline available in the market and corresponding to item 2 of JIS (Japanese Industrial Standard) K 2202. Each of the multi-layer hoses obtained in Examples and Comparative Examples, serving as a specimen, was fastened at one end to the vessel with a cramp and fitted at the other end with a stopper formed of stainless steel by using another cramp. While keeping this state, the specimen was set aside in the atmosphere at 40 °C for 20 weeks, followed by measuring an amount of permeation of fuel by using SHED (Sealed Housing For Evaporative Determination) under conditions specified by CARB (California Air Resources Board within the California Environment Protection Agency).

Evaluations of the fuel permeability are shown in Table 1 by "A" and "B". More specifically, the evaluation "A" means that an amount of fuel permeation the specimen had was less than 1/10 of that the multi-layer hose of Comparative Example 1 had. The evaluation "B" means that an amount of fuel permeation the specimen had was equivalent to that the multi-layer hose of Comparative Example 1 had.

### [Adhesiveness]

Each of the multi-layer hoses obtained in Examples and Comparative Examples was charged with a fuel prepared by mixing 10 vol.% of ethanol and 90 vol.% of regular gasoline available in the market and corresponding to item 2 of JIS K 2202, and then sealed and set aside at 60 °C for 168 hours. Upon retrieving the sealed fuel, the hose was further set aside in a room for 10 minutes and then punched to obtain a specimen having a width of 10 mm, a length of 200 mm and an original thickness.

The inner elastomer layer (or the inner layer) was slightly peeled from the intermediate layer at any portion of the thus obtained specimen, and thereafter the specimen was attached to a test machine at grips of the test machine, followed by operating the test machine under the conditions in accordance with JIS K 6256. Then, tensile loads were plotted on a graph, thereby obtaining a tensile load curve having waves with which a peel load (i.e., an average value of the waves) was determined. A peel strength was obtained by the following equation:
Peel strength (N/cm) = peel load (N) / width of the specimen (cm)

Evaluations of the adhesiveness are shown in Table 1 by "A" and "B". More specifically, the evaluation "A" means that the specimen had a better peel strength than that of the multi-layer hose of Comparative Example 1. The evaluation "B" means that the specimen was equivalent to the multi-layer hose of Comparative Example 1 in peel strength.

### [Extraction Property of Adhesive Component into Fuel]

Each of the multi-layer hoses obtained in Examples and Comparative Examples was charged with a fuel prepared by mixing 45 vol.% of isooctane, 45 vol.% of toluene and 10 vol.% of ethanol, and then sealed. The sealed fuel was retrieved from the hose after being set aside at 40 °C for 168 hours thereby obtaining an extract solution. The extract solution was dried in air to be concentrated, thereby obtaining a concentrated solution. Then, hexane was added to the concentrated solution and stirred for at least 1 hour in an ultrasonic cleaner.

After the concentrated solution was allowed to stand still for 24 hours, a supernatant was removed therefrom. A precipitate thus obtained was subjected to a vacuum drying at 40 °C for 8 hours to obtain an insoluble content. The insoluble content was then weighed as a hexane-insoluble content, upon which a weight of the hexane-insoluble content per unit area of an inner surface of the multi-layer hose was determined.

### [Total Evaluation]

A total evaluation of each of the multi-layer hoses obtained in Examples and Comparative Examples is shown in Table 1 by "A" or "B". The evaluation "A" is better than the evaluation "B".

| Examples | Structure of hose | | | | Performance of hose | | | |
|---|---|---|---|---|---|---|---|---|
| | Inner layer Inner layer | Intermediate layer | Intervening layer | Outer layer Outer layer | Fuel permeability | Adhesiveness | Hexane-insolubie content (mg/cm²) | Total Evaluation |
| Example 1 | Ternary copolymer fluoroelastomer A | Ethylene-vinyl alcohol resin | - | ECO | A | A | 0.018 | A |
| Example 2 | Binary copolymer fluoroelastomer | Ethylene-vinyl alcohol resin | - | ECO | A | A | 0.028 | A |
| Example 3 | Binary copolymer fluoroelastomer | Ethylene-vinyl alcohol resin | - | ECO | A | A | 0.028 | A |
| Example 4 | Ternary copolymer fluoroelastomer A (vulcanized with polyol) | Ethylene-vinyl alcohol resin | - | ECO | A | A | 0.018 | A |
| Example 5 | Ternary copolymer fluoroelastomer A | Polyvinyl alcohol resin | - | ECO | A | A | 0.018 | A |
| Example 6 | Ternary copolymer fluoroelastomer B | Ethylene-vinyl alcohol resin | - | ECO | A | A | 0.018 | A |
| Comparative Example 1 | Ternary copolymer fluoroelastomer | THV | - | ECO | B | B | 1.0 | B |
| Comparative Example 2 | NBR | THV | NBR | CSM | B | A | 4.2 | B |

| | | | | | | | | |
|---|---|---|---|---|---|---|---|---|
| Ternary copolymer fluoroelastomer A : vinylidene fluoride-hexafluoropropylene-tetrafluoroethylene ternary copolymer fluoroelastomer Ternary copolymer fluoroelastomer B : tetraffuoroethylene-propylene-vinylidene fluoride ternary copolymer fluoroelastomer | | | | | | | | |

As apparent from Table 1, it is confirmed that any of the multi-layer hoses of Examples 1to 6 is superior to those of Comparative Examples 1 and 2 in performance.

In other words, the intermediate layer of the multi-layer hoses of Examples 1 to 6 was formed of ethylene-vinyl alcohol resin thereby exhibiting a sufficient adhesiveness between the inner elastomer layer and the intermediate layer (or the fuel-barrier layer) as compared with Comparative Examples whose intermediate layer was formed of fluorothermoplastic. With this, the multi-layer hoses of Examples 1 to 6 are confirmed to have an excellent adhesiveness property. Further, the multi-layer hoses of Examples 1 to 6 exhibit a low amount of extraction of the adhesive component into fuel since they contain no adhesive component, which means that they have a high property against the adhesive component-extraction. Furthermore, regarding the fuel permeability, it is confirmed to be excellent against an ethanol-containing fuel.

According to the present invention, the multi-layer hose includes the intermediate layer to which the resin containing polyvinyl alcohol or ethylene-vinyl alcohol copolymer is employed as a main component. With this, the intermediate layer is allowed to have a strong adhesiveness to the inner and outer rubber layers, and the multi-layer hose is allowed to have an excellent fuel permeation resistance against the alcohol-containing fuel.

The entire contents of Japanese Patent Application P2007-169952 (filed June 28, 2007) are incorporated herein by reference.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

1. A multi-layer hose comprising:
an intermediate layer formed of a resin whose main component includes at least one of polyvinyl alcohol and ethylene-vinyl alcohol copolymer;
an outer layer formed of rubber and disposed outside the intermediate layer; and
an inner layer formed of fluoroelastomer and disposed inside the intermediate layer to be laminated directly on the intermediate layer.

2. A multi-layer hose as claimed in claim 1, wherein the fluoroelastomer forming the inner layer of the multi-layer hose includes at least one of vinylidene fluoride-hexafluoropropylene binary copolymer fluoroelastomer, vinylidene fluoride-hexafluoropropylene-tetrafluoroethylene ternary copolymer fluoroelastomer and tetrafluoroethylene-propylene-vinylidene fluoride ternary copolymer fluoroelastomer.

3. A multi-layer hose as claimed in claim 1 or 2, wherein the multi-layer hose has a hexane-insoluble content of not larger than 0.1 mg/cm², the hexane-insoluble content being able to be extracted from the multi-layer hose into a liquid prepared by mixing 45 vol.% of isooctane, 45 vol.% of toluene and 10 vol.% of ethanol and sealed in the multi-layer hose at a certain temperature for a certain period of time.

4. A multi-layer hose as claimed in any of claims 1 to 3, wherein the outer layer of the multi-layer hose is formed of at least one rubber selected from the group consisting of epichlorohydrin rubber (ECO), acrylonitrile butadiene (NBR), polyacrylic rubber (ACM), etylene acrylic rubber (AEM), chlorosulfonated polyethylene (CSM), chlorinated polyethylene (CPE), chloroprene rubber (CR), ethylene propylene rubber (EPM) and ethylene propylene diene rubber (EPDM).
